# EUROPÄISCHE PATENTSCHRIFT

(11) **EP 3 063 081 B1**
(45) Veröffentlichungstag und Bekanntmachung des Hinweises auf die Patenterteilung: **15.11.2017**
(21) Anmeldenummer: 14783569.8
(22) Anmeldetag: 29.09.2014
(51) Int. Cl.: B65G 21/20

(54) **BEHÄLTERBEHANDLUNGSANLAGE UND VERFAHREN ZUM VERSTELLEN EINES GELÄNDERS EINER BEHÄLTERBEHANDLUNGSANLAGE**
CONTAINER PROCESSING SYSTEM AND METHOD FOR ADJUSTING A RAILING OF A CONTAINER PROCESSING SYSTEM
SYSTÈME DE MANUTENTION DE RÉCIPIENTS ET PROCÉDÉ PERMETTANT DE DÉPLACER UNE RAMBARDE D'UN SYSTÈME DE MANUTENTION DE RÉCIPIENTS

(30) Priorität: 30.10.2013 DE 102013111932
(43) Veröffentlichungstag der Anmeldung: 07.09.2016
(73) Patentinhaber: Krones AG, 93073 Neutraubling (DE)
(72) Erfinder: HUETTNER, Johann, 93073 Neutraubling (DE); SEGER, Martin, 93073 Neutraubling (DE)
(74) Vertreter: Schuhbießer, Irmgard Gertrud
(86) Internationale Anmeldenummer: PCT/EP2014/070775
(87) Internationale Veröffentlichungsnummer: WO 2015/062799

(56) Entgegenhaltungen:
- WO-A1-2005/118437
- WO-A1-2010/130793
- US-A1- 2011 040 403
- US-B1- 6 378 695

## Beschreibung

Die vorliegende Erfindung bezieht sich auf eine Behälterbehandlungsanlage und ein Verfahren zum Verstellen eines Geländers einer Behälterbehandlungsanlage, nach den Oberbegriffen der Ansprüche 1, 6. Bei einer Behälterbehandlungsanlage, und insbesondere einer Abfüllanlage zum Abfüllen eines Mediums in Behälter, werden die Behälter oft über lange Transportwege mit einer Behälterhalteeinrichtung transportiert. Hierbei werden die Behälter mit Hilfe eines Geländers an der Behälterhalteeinrichtung geführt. Das Geländer ist beidseitig an der Behälterhalteeinrichtung angebracht. Die Breite zwischen Geländerläufen des Geländers ist je nach Anzahl und/oder Durchmesser der Behälter einzustellen, welche zwischen dem Geländer geführt werden sollen. Derzeit werden hierfür die Geländer entweder manuell eingestellt, was sehr zeitintensiv und damit teuer ist, oder es kommt eine motorische Variante zum Einsatz.

Die motorische Variante wird üblicherweise mit einem Motor und vielen Geländerhaltern ausgeführt. Zwischen den Geländerhaltern ist in der Regel eine Längswelle verlegt, von welcher mit einem Winkelgetriebe abgezweigt wird. Denkbar wäre es auch, einzelne Motoren zur Geländerverstellung mittels Funkverbindung anzusteuern.

Problematisch ist jedoch, dass bei bisherigen motorischen Varianten zur Geländerverstellung immer ein Getriebe erforderlich ist. Dadurch sind die motorischen Varianten sehr aufwändig in der Montage und Wartung, haben einen großen Platzbedarf und sind teuer.

Ein weiteres Problem besteht darin, dass die derzeitigen Varianten zur Geländereinstellung oft zu einer Fehleinstellung des Geländers führen. Dadurch kommt es immer wieder zu Stillständen der Behälterbehandlungsanlage, beispielsweise aufgrund von querliegenden oder zerbrochenen Behältern. Anlagenstillstände bedingen Produktionsausfälle und erfordern den Einsatz von Bedienpersonal, so dass die Produktionskosten steigen.

WO 2005118437 A1 beschreibt eine Vorrichtung und ein Verfahren, nach den Oberbegriffen der Ansprüche 1 und 6, zum Verstellen eines Geländers eines Fördermittels mit einer Verstelleinrichtung und ohne Aktuatorfeststellbremse. Daher ist es Aufgabe der vorliegenden Erfindung, eine Behälterbehandlungsanlage und ein Verfahren zum Verstellen eines Geländers einer Behälterbehandlungsanlage bereitzustellen, mit welchen die zuvor genannten Probleme gelöst werden können. Insbesondere soll eine Behälterbehandlungsanlage und ein Verfahren zum Verstellen eines Geländers einer Behälterbehandlungsanlage bereitgestellt werden, bei welchen die Verstellung des Geländers einfach, präzise, reproduzierbar, schnell, wartungsarm und kostengünstig realisiert werden kann.

Diese Aufgabe wird durch eine Behälterbehandlungsanlage nach Patentanspruch 1 gelöst. Die Behälterbehandlungsanlage umfasst ein Geländer zum Führen von Behältern an einer Behälterhalteeinrichtung und eine Verstelleinrichtung zum Verstellen zumindest eines Teils des Geländers relativ zu der Behälterhalteeinrichtung, wobei die Verstelleinrichtung einen mit Magnetismus arbeitenden Aktuator und ein Verstellelement derart aufweist, dass der Aktuator einen Vorschub auf das Verstellelement ausüben kann, wie in Anspruch 1 angegeben.

Bei der Behälterbehandlungsanlage kann die Verstellung des Geländers sehr präzise jedoch trotzdem sehr einfach und kostengünstig durchgeführt werden. Ein Getriebe ist nicht mehr erforderlich. Noch dazu kann eine Fehleinstellung des Geländers einfach und wirksam verhindert werden.

Die Verstelleinrichtung zur Verstellung des Geländers hat zudem eine hohe Lebensdauer. Darüber hinaus ist die Verstelleinrichtung zur Verstellung des Geländers ohne Zusatzaufwand diagnosefähig bzw. überwachbar. Ein weiterer Vorteil der Verstelleinrichtung zur Verstellung des Geländers besteht darin, dass die Geländerverstellung leicht nachrüstbar ist. Die Verstelleinrichtung zur Verstellung des Geländers hat einen sehr einfachen Aufbau.

Vorteilhafte weitere Ausgestaltungen der Behälterbehandlungsanlage sind in den abhängigen Patentansprüchen angegeben.

Die Behälterbehandlungsanlage hat zudem eine vom Aktuator antreibbare Welle, an welcher ein Koppelelement zur Kopplung mit dem Verstellelement angeordnet ist.

Zudem ist das Verstellelement eine Zahnstange oder als Gliederkette mit starren Gliedern ausgeführt und das Koppelelement ein Zahnrad. Alternativ kann das Koppelelement den Aktuator und das Verstellelement mit Kraftschluss koppeln.

Bei der Behälterbehandlungsanlage ist die Zahnstange mit dem Zahnrad verschiebbar, wenn die Welle vom Aktuator angetrieben wird, um das Geländer relativ zu der Behälterhalteeinrichtung zu verstellen.

Die Behälterbehandlungsanlage hat eine Feststellbremse zum Halten des Aktuators im Ruhezustand. Der Ruhezustand entspricht dem Zustand, in welchem keine Verstelltätigkeit mit der Verstelleinrichtung ausgeführt wird. Die Feststellbremse kann an der Welle angeordnet sein und/oder eine magnetische lösbare Federkraftbremse sein.

Der Aktuator der Behälterbehandlungsanlage kann ein 4-poliger Gleichstromaktuator sein, der mit Magnetismus zwischen zwei Arbeitspunkten betreibbar ist. Damit kann das Geländer zwischen einer maximal und einer minimal möglichen Breite zwischen zwei Geländerläufen an der Behälterhalteeinrichtung verstellt werden. Für das Anfahren von Zwischenstellungen zwischen der maximal und minimal möglichen Breite kann beispielsweise ein Absolutwertgeber eingesetzt werden. Zusätzlich oder alternativ ist es möglich, dass für jedes Verstellelement ein Aktuator vorgesehen ist.

Es ist möglich, dass die Verstelleinrichtung ein gegen Eindringen von Staub und Wasser abgedichtetes Gehäuse zur Montage der Verstelleinrichtung an der Behälterhalteeinrichtung aufweist. Dies ist besonders vorteilhaft, wenn die von der Behälterhalteeinrichtung gehaltenen Behälter bereits mit einem Medium gefüllt sind, wie dies beispielsweise bei einer Abfüllanlage der Fall sein kann.

Die zuvor beschriebene Behälterbehandlungsanlage kann eine Abfüllanlage zum Abfüllen mindestens eines Mediums in einen Behälter sein. Zusätzlich oder alternativ kann die zuvor beschriebene Behälterhalteeinrichtung zum hängenden Halten oder zum stehenden Halten der Behälter ausgestaltet sein.

Die Aufgabe wird zudem durch ein Verfahren zum Verstellen eines Geländers einer Behälterbehandlungsanlage nach dem unabhängigen Verfahrensanspruch 6 gelöst. Bei dem Verfahren dient das Geländer zum Führen von Behältern an einer Behälterhalteeinrichtung. Das Verfahren hat den Schritt eines Verstellens, mit einer Verstelleinrichtung der Behälterbehandlungsanlage, zumindest eines Teils des Geländers relativ zu der Behälterhalteeinrichtung, wobei ein Aktuator der Verstelleinrichtung einen Vorschub auf ein Verstellelement der Verstelleinrichtung ausübt, wie in dem unabhängigen Verfahrensanspruch angegeben.

Das Verfahren erzielt die gleichen Vorteile wie sie zuvor in Bezug auf die Behälterbehandlungsanlage genannt sind.

Nachfolgend ist die Erfindung unter Bezugnahme auf die beiliegende Zeichnung und anhand von Ausführungsbeispielen näher beschrieben. Es zeigen:
Fig. 1 eine schematische Schnittansicht einer Behälterbehandlungsanlage gemäß einem Ausführungsbeispiel;
Fig. 2 eine dreidimensionale Außenansicht einer Verstelleinrichtung zur Geländerverstellung für eine Behälterbehandlungsanlage gemäß dem Ausführungsbeispiel;
Fig. 3 eine schematische Seitenansicht der ohne Gehäusedeckel dargestellten Verstelleinrichtung zur Geländerverstellung für die Behälterbehandlungsanlage gemäß dem Ausführungsbeispiel;
Fig. 4 eine Schnittansicht der Verstelleinrichtung zur Geländerverstellung für die Behälterbehandlungsanlage gemäß dem Ausführungsbeispiel;
Fig. 5 eine Schnittansicht der Verstelleinrichtung zur Geländerverstellung für die Behälterbehandlungsanlage gemäß dem Ausführungsbeispiel entlang dem Schnitt B-B in Fig. 4; und
Fig. 6 eine schematische Schnittansicht einer Behälterbehandlungsanlage gemäß einem zweiten Ausführungsbeispiel.

In den Figuren sind gleiche oder funktionsgleiche Elemente, sofern nichts anderes angegeben ist, mit denselben Bezugszeichen versehen.

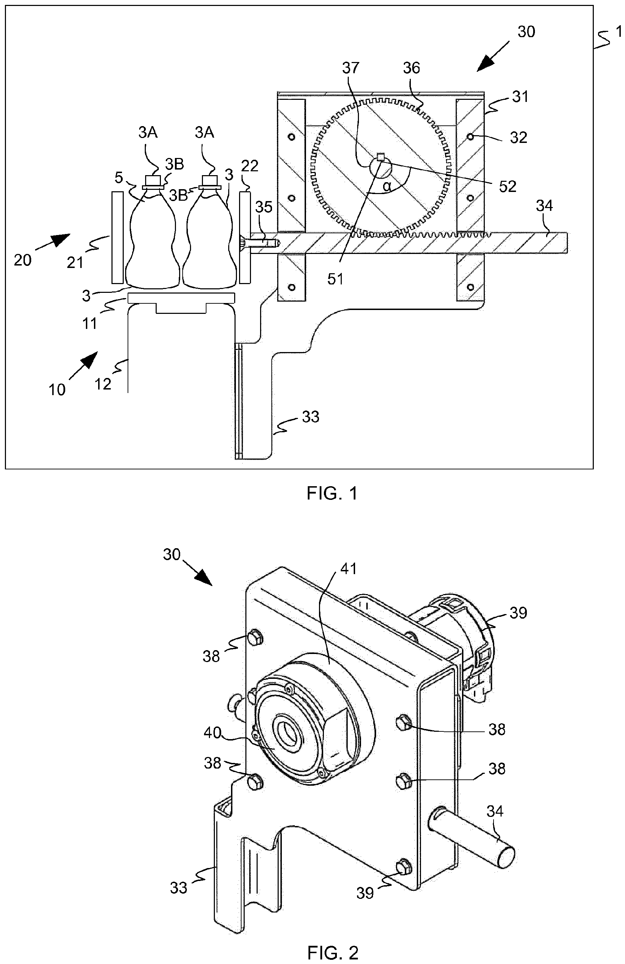

Fig. 1 zeigt eine Behälterbehandlungsanlage 1 in welcher Behälter 3 mit einem Hals 3A und optional einem Neckring 3B behandelt werden können. Die Behälterbehandlungsanlage 1 kann insbesondere eine Abfüllanlage zum Abfüllen von einem Medium 5 oder von mehrerer Medien 5 in einen Behälter 3 sein. Die Behälter 3 können Glasflaschen, Kunststofflaschen, Dosen, Pakete, insbesondere aus mehreren Flaschen, Dosen, usw. sein, in welche ein flüssiges und/oder gasförmiges und/oder festes Medium 5 gefüllt werden kann. Das feste Medium 5 kann beispielsweise in Form von Kügelchen vorhanden sein.

In Fig. 1 ist ein Behälter 3 gezeigt, der auf einer Behälterhalteeinrichtung 10 der Behälterbehandlungsanlage 1 stehend gehalten wird. Hierfür hat die Behälterhalteeinrichtung 10 ein Band 11, wie beispielsweise einen Scharnierbandförderer, usw., das oben an einem Untergestell 12 montiert ist. Dadurch kann die Behälterhalteeinrichtung 10 die Behälter 3 auch in die Zeichenebene von Fig. 1 hinein oder heraus transportieren. Die Behälterbehandlungsanlage 1 hat zudem ein Geländer 20, das bei der Behälterhalteeinrichtung 10 angeordnet ist. Das Geländer 20 umfasst einen ersten Geländerlauf 21 und einen zweiten Geländerlauf 22, zwischen denen die Behälter 3 angeordnet werden können. In Fig. 1 sind zwei Behälter 3 zwischen dem ersten und zweiten Geländerlauf 21, 22 gehalten. Es können aber auch mehr als zwei Behälter 3 oder auch nur ein Behälter 3 zwischen dem ersten und zweiten Geländerlauf 21, 22 gehalten werden.

Das Geländer 20 und somit sein erster und zweiter Geländerlauf 21, 22 ist so an der Behälterhalteeinrichtung 10 angeordnet, dass die Behälter 3 an der Behälterhalteeinrichtung 10 geführt werden. Zum Verstellen des Geländers 20 ist eine Verstelleinrichtung 30 der Behälterbehandlungsanlage 1 vorgesehen. Die Verstelleinrichtung 30 ist seitlich an der Behälterhalteeinrichtung 10, genauer gesagt ihrem Untergestell 12, angeordnet und montiert. Die Verstelleinrichtung 30 kann das Geländer 20 derart verstellen, dass die Behälter 3 sicher zwischen dem ersten und zweiten Geländerlauf 21, 22 geführt werden können. Wie in Fig. 1 gezeigt, ist das Geländer 20 hierfür in der Breite verstellbar. In Fig. 1 ist dies die horizontale Richtung. Auch wenn dies in Fig. 1 nicht gezeigt ist, kann ein Verstellen des Geländers 20 auch von beiden Seiten aus erfolgen, wobei der Verstellweg unterschiedlich sein kann.

Die Verstelleinrichtung 30 in Fig. 1 hat ein Gestell 31 mit Öffnungen 32, mit deren Hilfe ein Gehäuse 33 unter Verwendung von Befestigungselementen an dem Gestell 31 befestigt werden kann. In Fig. 1 ist nur eine der Öffnungen mit einem Bezugszeichen versehen. Zudem ist das Gehäuse 33 an dem Untergestell 12 befestigt. Bei der in Fig. 1 gezeigten Variante ist das Geländer 20 beabstandet an der Behälterhalteeinrichtung 10 angeordnet.

Wie in Fig. 1 gezeigt, hat die Verstelleinrichtung 30 zudem eine Zahnstange 34, die im Wesentlichen quer zu dem ersten und zweiten Geländerlauf 21, 22 angeordnet ist. Die Zahnstange 34 ist mit einem Befestigungselement 35 an dem zweiten Geländerlauf 22 befestigt. In die Zähne der Zahnstange 34 greift zudem ein Zahnrad 36. Hierbei sind an der Zahnstange 34 so viele Zähne vorgesehen, dass das Zahnrad 36 an der Zahnstange 34 um den Drehwinkel α zwischen einem ersten Arbeitspunkt 51 und einem zweiten Arbeitspunkt 52 um eine Welle 37 gedreht werden kann. Der Drehwinkel α beträgt beispielsweise ca. 73° kann jedoch auch andere geeignete Werte annehmen. In einem solchen Fall kann das Zahnrad 36 derart ausgestaltet sein, dass ein Verstellweg des Geländers 20, genauer gesagt seines zweiten Geländerlaufs 22, mit einer Länge von ca. 60 mm erzielt werden kann. Es sind jedoch auch andere Drehwinkel α und Verstellwege möglich. Die Zahnstange 34 kann somit auch als erstes Verstellelement und das Zahnrad 36 auch als zweites Verstellelement der Verstelleinrichtung 30 bezeichnet werden.

Fig. 2 zeigt die Verstelleinrichtung 30 in einer dreidimensionalen Ansicht von außen. Hier ist das Gehäuse 33 zu sehen, das mit weiteren Befestigungselementen 38 an dem Gestell 31 (Fig. 1) befestigt ist. Zudem ist in der Darstellung von Fig. 2 ein Aktuator 39 sichtbar, welcher die Welle 37 und damit auch das daran angeordnete Zahnrad 36 von Fig. 1 antreiben kann. Vorne in Fig. 2 ist noch eine Feststellbremse 40 und ein Flansch 41 sichtbar. Die Feststellbremse 40 ist ebenfalls an der Welle 37 von Fig. 1 angeordnet.

Der Aktuator 39 ist bei dem Ausführungsbeispiel ein 4-poliger Gleichstromaktuator der auch als Magnetaktuator oder Torqueaktuator bezeichnet wird. Bei dem Aktuator 39 wirkt ein durch Strom in seinem Stator erzeugtes Magnetfeld zusammen mit einem Magnetfeld seines Rotors. Der Rotor kann als Permanentmagnet ausgeführt sein. Der Aktuator 39 arbeitet also mit Magnetismus. Dadurch wird bei dem Aktuator 39 ein Drehmoment (Torque) erzeugt, solange die Magnetübergänge seines Rotors und Stators nicht vollständig übereinstimmen. Somit wird keine Rotation des Rotors des Aktuators 39 erzeugt, wenn die Magnetübergänge seines Rotors und seines Stators übereinstimmen. Je nach Position von Rotor und Stator zueinander kann bei dem Aktuator 39 eine Drehung im Uhrzeigersinn oder gegen den Uhrzeigersinn erzeugt werden. Hierbei ist der Drehmomentpegel proportional zu der Intensität des Stroms, der in den Spulen des Stators des Aktuators 39 fließt. Das Restdrehmoment, das sich aufgrund von beispielsweise Reibung und/oder Rastung und/oder magnetostatischer Kraft ergeben kann, ist bei dem Aktuator 39 sehr gering.

Beispielsweise ist bei dem Aktuator 39 das Drehmoment gleich Null, wenn sich der Statorpol und der Rotormagnet direkt gegenüberstehen. Diese Stellung wird mit Totpunkt bezeichnet. Mit zunehmendem Polwinkel steigt das Drehmoment bis zu einem Maximum, welches bei etwa 8° annähernd erreicht wird. Bis zu einem Winkel von 82° bleibt das Drehmoment auf diesem hohen Niveau, bevor es bei einer weiteren Annäherung von Statorpol und Rotormagnet und Erreichen der 90°-Lage wieder Richtung Null geht. Betreibt man jetzt den Aktuator 39 zwischen den beiden Extremwerten und folglich auch Endlagen, kann durch einfache Spannungsumkehr die Drehrichtung bestimmt werden.

Demzufolge ist der Aktuator 39 zwischen den zwei Endlagen, den zwei Arbeitspunkten 51, 52 in Fig. 1, betreibbar. Somit kann der Aktuator 39 das Zahnrad zwischen den in Fig. 1 gezeigten beiden Arbeitspunkten 51, 52 je nach Bedarf hin und herdrehen. Hierbei sind auch Zwischenstellungen zwischen den beiden Arbeitspunkten 51, 52 anfahrbar und haltbar. Die Feststellbremse 40 hält den Aktuator 39 im Ruhezustand in Position, also wenn keine Verstellung des Geländers 20 mit Hilfe des Aktuators 39 erfolgt. Die Feststellbremse 40 ist bei dem Ausführungsbeispiel eine Federkraftbremse, insbesondere eine magnetisch lösbare Federkraftbremse.

Somit sind bei der Verstelleinrichtung 30 der Aktuator 39 und das erste Verstellelement in Form der Zahnstange 34 derart zueinander angeordnet, dass der Aktuator 39 einen direkten Vorschub auf das Verstellelement in Richtung auf einen Behälter 3 an der Behälterhalteeinrichtung 10 oder von dem Behälter 3 weg ausüben kann. Zudem ist auch das zweite Verstellelement in Form des Zahnrads 36 entsprechend an der Welle 37 des Aktuators 39 angeordnet. Somit ist das Zahnrad 36 außerdem ein Koppelelement, um den Aktuator 39 mit der Zahnstange 34 als erstem Verstellelement zu koppeln.

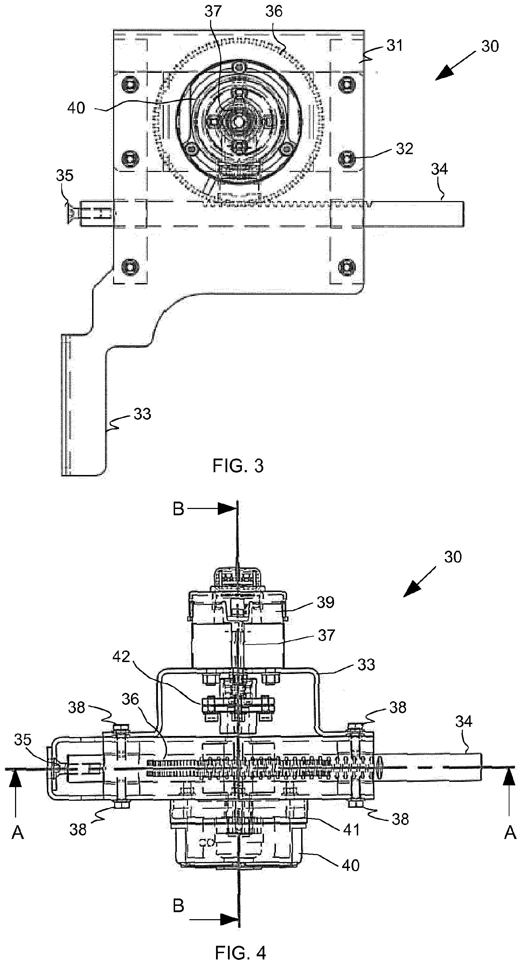

In Fig. 3 ist die Verstelleinrichtung 30 ohne das Gehäuse 33 in einer Seitenansicht gezeigt, so dass die Anordnung der Feststellbremse 40 an der Welle 37 und relativ zum Zahnrad 36 sichtbar ist.

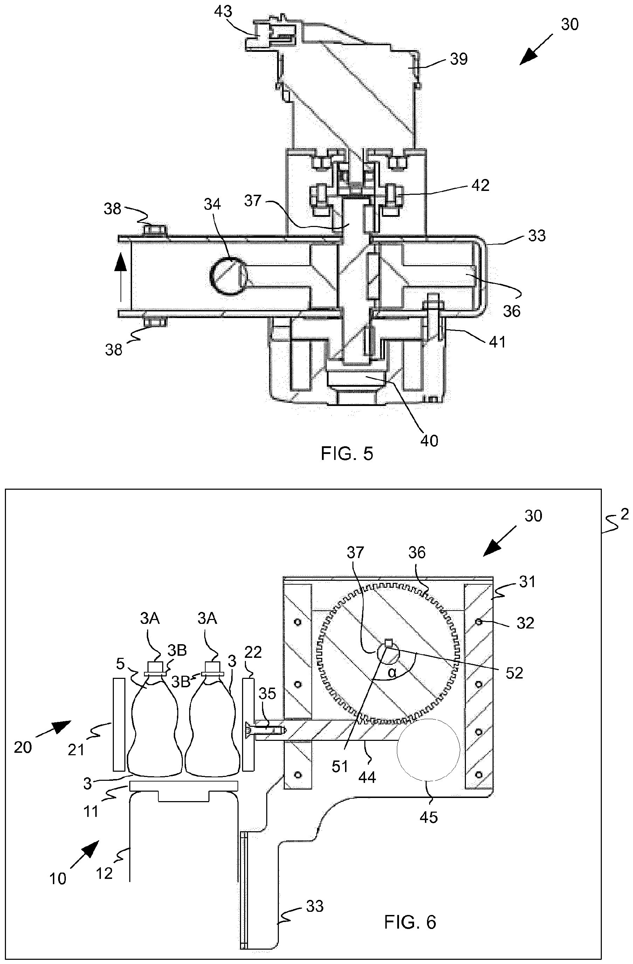

In Fig. 4 und Fig. 5 zeigen die Verstelleinrichtung 30 in verschiedenen Schnittansichten genauer. In Fig. 4 ist mit zwei Pfeilen A ein Schnitt A-A angegeben, welcher der Ansicht der Verstelleinrichtung 30 entspricht, die in Fig. 1 gezeigt ist. Darüber hinaus ist in Fig. 4 mit zwei Pfeilen B ein Schnitt B-B angegeben, welcher der Ansicht der Verstelleinrichtung 30 entspricht, die in Fig. 5 gezeigt ist.

In Fig. 4 ist zusätzlich zu den zuvor beschriebenen Elementen der Verstelleinrichtung 30 noch eine Kupplung 42 dargestellt, welche den Aktuator 39 mit der Welle 37 an ein Wellenstück der Welle 37, an welchem das Zahnrad 36 angeordnet ist, ein- oder auskuppeln kann.

In Fig. 5 ist zusätzlich zu den zuvor beschriebenen Elementen der Verstelleinrichtung 30 noch ein Aktuatoranschluss 43 dargestellt, welcher zum Anschluss des Aktuators 39 an eine nicht dargestellte elektrische Leitung dient, um dem Aktuator 39 elektrischen Strom zuzuführen.

Die zuvor beschriebene Verstelleinrichtung 30 ist somit eine kompakte Baugruppe, in welche der Aktuator 39, die Welle 37 und die daran angeordneten Elemente integriert sind, wie zuvor beschrieben. Der Aktuator 39, die Welle 37 und die daran angeordneten Elemente sind in das Gehäuse 33 aufgenommen. Hierbei ragt die Zahnstage 34 aus dem Gehäuse 33 heraus, wie in den Figuren dargestellt. Die Verstelleinrichtung 30 ist kostengünstig herstellbar und einfach an der Behälterhalteeinrichtung 10 und dem Geländer 20 montierbar.

Fig. 6 zeigt eine Behälterbehandlungsanlage 2 mit einer Verstelleinrichtung 30 gemäß einem zweiten Ausführungsbeispiel. Hier ist im Unterschied zum ersten Ausführungsbeispiel keine Zahnstage 34 mehr vorgesehen, welche beidseitig aus dem Gehäuse 33 herausragt, sondern das Gehäuse 33 ist an seiner vom Geländer 20 abgewandten Seite geschlossen ausgeführt. Zudem ist anstelle der Zahnstange 34 gemäß dem ersten Ausführungsbeispiel bei dem vorliegenden Ausführungsbeispiel eine Gliederkette 44 mit beweglich gekoppelten jedoch starren Gliedern vorhanden, in welche das Zahnrad 36 eingreifen kann und die an ihrem einen Ende auf eine Aufwickeleinrichtung 45 aufwickelbar ist. Die Gliederkette 44 kann auch als bewegliche Gliederkette 44 mit starren Gliedern bezeichnet werden.

Die Aufwickeleinrichtung 45 ist in Fig. 6 nur sehr schematisch dargestellt und kann insbesondere eine Welle sein, auf welche die Gliederkette 44 aufgewickelt wird. Alternativ oder zusätzlich kann die Aufwickeleinrichtung 45 als ein schneckenförmiges Gehäuse ausgestaltet sein, in welches die Gliederkette 44 eingeschoben und damit im Gehäuse aufgewickelt wird.

Ansonsten ist die Verstelleinrichtung 30 gemäß dem vorliegenden Ausführungsbeispiel auf die gleiche Weise ausgeführt, wie bei dem ersten Ausführungsbeispiel beschrieben. Daher wird hier auf das erste Ausführungsbeispiel verwiesen.

Alle zuvor beschriebenen Ausgestaltungen der Behälterbehandlungsanlagen 1, 2 mit Behälterhalteeinrichtung 10, Geländer 20 und Verstelleinrichtung 30 können einzeln oder in allen möglichen Kombinationen Verwendung finden. Insbesondere können alle Merkmale der zuvor beschriebenen Ausführungsbeispiele beliebig miteinander kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterhalteeinrichtung 10 kann auch ein Transporteur sein, bei welchem die Behälter 3 beispielsweise an ihrem Neckring 3B gehalten werden und hängend gehalten und/oder transportiert werden. Die Behälterhalteeinrichtung 10 kann ein Scharnierbandförderer, ein Luftförderer, ein Neckhandlingförderer, usw. sein.

Bei der Verstelleinrichtung 30 können auch ein anderes erstes Verstellelement in Form der Zahnstange 34 und ein anderes zweites Verstellelement in Form des Zahnrads 36 Verwendung finden. Beispielsweise können das erste und zweite Verstellelement nicht über eine Verzahnung sondern über einen Kraftschluss, insbesondere durch Reibung, gekoppelt sein, so dass die Antriebskraft des Aktuators 39 auf das erste Verstellelement und dann auf das Geländer 20 übertragen wird. Es sind auch andere Kopplungen von erstem und zweitem Verstellelement denkbar, soweit die zuvor beschriebene Funktion des direkten Vorschubs des Aktuators 39 auf das erste Verstellelement und damit das Geländer 20 gewährleistet ist.

Es ist auch möglich, dass jedem Verstellelement, also dem ersten und zweiten Verstellelement, jeweils ein Aktuator 39 zugeordnet ist. Somit ist in einem solchen Fall pro Verstellelement ein Aktuator 39 vorhanden.

Das Gehäuse 33 der Verstelleinrichtung 30 ist vorzugsweise gegen Staub und Flüssigkeit abgedichtet. Insbesondere erfüllt das Gehäuse 33 zumindest in Bezug auf die elektrischen Teile des Aktuators 39 die Anforderungen von IP 65 gemäß der europäischen Norm EN 60529. Das Gehäuse 33 kann beispielsweise aus Kunststoff gefertigt sein.

Die Behälterbehandlungsanlage 1 kann eine weitere Verstelleinrichtung 30 aufweisen, welche den ersten Geländerlauf 21 in Richtung auf den oder weg von dem zweiten Geländerlauf 22 relativ zur Behälterhalteeinrichtung 10 verstellt. Somit können die beiden Geländerläufe 21, 22 je nach Bedarf verstellt werden, um das Geländer 20 in der Breite zu verstellen.

Zudem kann die Verstelleinrichtung 30 auch derart ausgestaltet sein, dass sie nicht nur einen Teil des Geländers 20 verstellt, nämlich den zweiten Geländerlauf 22 bei dem Ausführungsbeispiel, sondern auch den ersten Geländerlauf 21. Hierfür kann die Verstelleinrichtung 30 beispielsweise entsprechend durch das Untergestell 12 der Behälterhalteeinrichtung 10 oder über ein entsprechendes Gestell einer Behälterhalteeinrichtung 10 geführt sein, welche die Behälter 3 hängend hält.

Zudem kann die Verstelleinrichtung 30 bei Bedarf so ausgestaltet sein, dass sie das Geländer 20 in der Höhe relativ zur Behälterhalteeinrichtung 10 verstellt. Damit würde der Abstand zwischen der Behälterhalteeinrichtung 10 und dem Geländer 20 eingestellt.

Auch wenn die Zahnstage 34 bei dem ersten Ausführungsbeispiel beidseitig aus dem Gehäuse 33 herausragt, kann das Gehäuse 33 auch so ausgestaltet sein, dass die Zahnstage 34 nur an der Seite zum Geländer 20 aus dem Gehäuse 33 auskragt. Dadurch kann das Gehäuse 33 an seiner vom Geländer 20 abgewandten Seite geschlossen ausgeführt sein.

Das Geländer 20 kann entlang einer Behälterhalteeinrichtung 10 angeordnet sein, welche die Behälter 3 auf einer geraden Strecke transportiert. Alternativ oder zusätzlich kann das Geländer 20 entlang einer Behälterhalteeinrichtung 10 angeordnet sein, welche die Behälter 3 auf einer gebogenen Strecke transportiert. In diesen Fällen folgt das Geländer 20 der Form der Behälterhalteeinrichtung 10 und ist demzufolge ebenfalls zumindest entlang einer vorbestimmten Strecke gerade und/oder zumindest entlang einer anderen vorbestimmten Strecke gebogen.

### Bezugszeichenliste

- 1,2: Behälterbehandlungsanlage
- 3: Behälter
- 3A: Hals
- 3B: Neckring
- 5: Medium
- 10: Behälterhalteeinrichtung
- 11: Transportband
- 12: Untergestell
- 20: Geländer
- 21: erster Geländerlauf
- 22: zweiter Geländerlauf
- 30: Verstelleinrichtung
- 31: Gestell
- 32: Öffnungen
- 33: Gehäuse
- 34: Zahnstange (erstes Verstellelement)
- 35: Befestigungselement
- 36: Zahnrad (zweites Verstellelement, Koppelelement)
- 37: Welle
- 38: Befestigungselement
- 39: Aktuator
- 40: Feststellbremse
- 41: Flansch
- 42: Kupplung
- 43: Aktuatoranschluss
- 44: Gliederkette
- 45: Aufwickeleinrichtung
- α: Drehwinkel

## Patentansprüche

1. Behälterbehandlungsanlage (1), mit
einem Geländer (20) zum Führen von Behältern (3) an einer Behälterhalteeinrichtung (10),
einer Verstelleinrichtung (30) zum Verstellen zumindest eines Teils des Geländers (20) relativ zu der Behälterhalteeinrichtung (10), wobei die Verstelleinrichtung (30) einen mit Magnetismus arbeitenden Aktuator (39) und ein Verstellelement (34) derart integriert aufweist, dass der Aktuator (39) einen Vorschub auf das Verstellelement (34) ausüben kann, einer vom Aktuator (39) antreibbaren Welle (37), an welcher ein Koppelelement (36) zur Kopplung mit dem Verstellelement (34) angeordnet ist, **dadurch gekennzeichnet, dass** die Behälterbehandlungsanlage (1) eine Feststellbremse zum Halten des Aktuators (39) im Ruhezustand umfasst, wobei das Verstellelement als Zahnstange (34) oder als Gliederkette (44) mit starren Gliedern ausgeführt ist und das Koppelelement ein Zahnrad (36) ist oder das Koppelelement den Aktuator (39) und das Verstellelement mit Kraftschluss koppelt, und
wobei das Verstellelement (34) mit dem Zahnrad (36) verschiebbar ist, wenn die Welle (37) vom Aktuator (39) angetrieben wird, um das Geländer (20) relativ zu der Behälterhalteeinrichtung (10) zu verstellen.

2. Behälterbehandlungsanlage (1) nach Anspruch 1, wobei die Feststellbremse (40) an der Welle (37) angeordnet ist und/oder eine magnetische lösbare Federkraftbremse ist.

3. Behälterbehandlungsanlage (1) nach Anspruch 1 oder 2, wobei der Aktuator (39) ein 4-poliger Gleichstromaktuator ist, der mit Magnetismus zwischen zwei Arbeitspunkten (51, 52) betreibbar ist, und/oder für jedes Verstellelement (34) ein Aktuator (39) vorgesehen ist.

4. Behälterbehandlungsanlage (1) nach einem der vorangehenden Ansprüche,
wobei die Verstelleinrichtung (30) ein gegen Eindringen von Staub und Wasser abgedichtetes Gehäuse (33) zur Montage der Verstelleinrichtung (30) an der Behälterhalteeinrichtung (10) und zur Aufnahme des Aktuators (39) und des Verstellelements (34) aufweist.

5. Behälterbehandlungsanlage (1) nach einem der vorangehenden Ansprüche,
wobei die Behälterbehandlungsanlage (1) eine Abfüllanlage zum Abfüllen mindestens eines Mediums (5) in einen Behälter (3) ist, und/oder
wobei die Behälterhalteeinrichtung (10) zum hängenden Halten oder zum stehenden Halten der Behälter (3) ausgestaltet ist.

6. Verfahren zum Verstellen eines Geländers (20) einer Behälterbehandlungsanlage (1), welches Geländer (20) zum Führen von Behältern an einer Behälterhalteeinrichtung (10) dient, mit den Schritten
Verstellen, mit einer Verstelleinrichtung (30) der Behälterbehandlungsanlage (1), zumindest eines Teils des Geländers (20) relativ zu der Behälterhalteeinrichtung (10), wobei ein mit Magnetismus arbeitender Aktuator (39) der Verstelleinrichtung (30) einen Vorschub auf ein Verstellelement (34) der Verstelleinrichtung (30) ausübt, wobei der Aktuator (39) eine Welle (37) antreibt, an welcher ein Koppelelement (36) zur Kopplung mit dem Verstellelement (34) angeordnet ist, **gekennzeichnet durch** die folgenden Schritte:
Halten des Aktuators (39) im Ruhezustand mit einer Feststellbremse,
wobei das Verstellelement als Zahnstange (34) oder als Gliederkette (44) mit starren Gliedern ausgeführt ist und das Koppelelement ein Zahnrad (36) ist oder das Koppelelement den Aktuator (39) und das Verstellelement mit Kraftschluss koppelt, und
wobei das Verstellelement (34) mit dem Zahnrad (36) verschiebbar ist, wenn die Welle (37) vom Aktuator (39) angetrieben wird, um das Geländer (20) relativ zu der Behälterhalteeinrichtung (10) zu verstellen.

## Claims

1. A container treatment plant (1), comprising
a railing (20) for guiding containers (3) at a container holding means (10),
an adjusting means (30) for adjusting at least one part of the railing (20) relative to the container holding means (10), wherein the adjusting means (30) comprises an actuator (39) operating with magnetism and comprises an adjusting element (34), wherein the actuator (39) and the adjusting element (34) are integrated such that the actuator (39) can effect a feed to the adjusting element (34),
an axle (37) which is drivable by the actuator (39) and at which is positioned a coupling element (36) for coupling with the adjusting element (34),
**characterized in that**
the container treatment plant (1) comprises a locking brake for holding the actuator (39) in a state of rest,
wherein the adjusting element is implemented as a toothed bar (34) or a link chain (44) which comprises rigid links and the coupling element is a toothed wheel (36) or the coupling element couples the actuator (39) and the adjusting element with force closure, and
wherein the adjusting element (34) is adjustable by the toothed wheel (36), if the axle (37) is driven by the actuator (39), to adjust the railing (20) relative to the container holding means (10).

2. The container treatment plant (1) according to claim 1, wherein the locking brake (40) is positioned at the axle (37) and/or is a spring force brake which is magnetically releasable.

3. The container treatment plant (1) according to claim 1 or 2, wherein the actuator (39) is a 4-pole-direct-current actuator which is operable by magnetism between two working points (51, 52) and/or an actuator (39) is provided for each adjusting element (34).

4. The container treatment plant (1) according to any one of the preceding claims,
wherein the adjusting means (30) comprises a housing (33) which is sealed against the intrusion of dust and water and which serves for mounting the adjusting means (30) at the container holding means (10) and for receiving the actuator (39) and the adjusting element (34).

5. The container treatment plant (1) according to any one of the preceding claims,
wherein the container treatment plant (1) is a filling plant for filling at least one medium (5) into a container (3), and/or
wherein the container holding means (10) is configured to hold the containers (3) in a suspending state or in a standing state.

6. A method for adjusting a railing (20) of a container treatment plant (1), which railing (20) serves for guiding containers (3) at a container holding means (10), the method comprising the steps of
adjusting, by an adjusting means (30) of the container treatment plant (1), at least one part of the railing (20) relative to the container holding means (10), wherein the adjusting means (30) comprises an actuator (39) which operates with magnetism and effects a feed to an adjusting element (34) of the adjusting means (30), wherein the actuator (39) drives an axle (37) at which is positioned a coupling element (36) for coupling with the adjusting element (34),
**characterized by** the following steps of
holding the actuator (39) in a state of rest by a locking brake,
wherein the adjusting element is implemented as a toothed bar (34) or a link chain (44) which comprises rigid links and the coupling element is a toothed wheel (36) or the coupling element couples the actuator (39) and the adjusting element with force closure, and
wherein the adjusting element (34) is adjustable by the toothed wheel (36), if the axle (37) is driven by the actuator (39), to adjust the railing (20) relative to the container holding means (10).

## Revendications

1. Système de traitement de contenants (1), comprenant
une rambarde (20) pour le guidage de contenants (3) au niveau d'un moyen de retenue de contenants (10),
un moyen de réglage (30) pour le réglage d'au moins une partie de la rambarde (20) par rapport au moyen de retenue de contenants (10), dans lequel le moyen de réglage (30) comprend un actionneur (39) à fonctionnement magnétique et comprend un élément de réglage (34), dans lequel l'actionneur (39) et l'élément de réglage (34) sont intégrés de telle manière que l'actionneur (39) peut exercer un mouvement d'avance sur l'élément de réglage (34),
un axe (37) qui peut être entraîné par l'actionneur (39) et au niveau duquel est positionné un élément d'accouplement (36) pour l'accouplement à l'élément de réglage (34),
**caractérisé en ce que**
le système de traitement de contenants (1) comprend un frein d'immobilisation destiné à maintenir l'actionneur (39) dans un état de repos,
dans lequel l'élément de réglage est réalisé sous la forme d'une crémaillère (34) ou d'une chaîne à maillons (44) qui comprend des maillons rigides et l'élément d'accouplement est une roue dentée (36) ou l'élément d'accouplement accouple l'actionneur (39) et l'élément de réglage à force, et
dans lequel l'élément de réglage (34) peut être réglé par la roue dentée (36), si l'axe (37) est entraîné par l'actionneur (39), pour régler la rambarde (20) par rapport au moyen de retenue de contenants (10).

2. Système de traitement de contenants (1) selon la revendication 1, dans lequel le frein d'immobilisation (40) est positionné au niveau de l'axe (37) et/ou est un frein à ressort qui est libéré magnétiquement.

3. Système de traitement de contenants (1) selon la revendication 1 ou 2, dans lequel l'actionneur (39) est un actionneur de courant continu quadripolaire qui peut fonctionner par magnétisme entre deux points de travail (51, 52) et/ou un actionneur (39) est prévu pour chaque élément de réglage (34).

4. Système de traitement de contenants (1) selon l'une quelconque des revendications précédentes,
dans lequel le moyen de réglage (30) comprend un logement (33) qui est rendu hermétique à la pénétration de poussière et d'eau et qui sert à monter le moyen de réglage (30) au niveau du moyen de retenue de contenants (10) et à recevoir l'actionneur (39) et l'élément de réglage (34).

5. Système de traitement de contenants (1) selon l'une quelconque des revendications précédentes,
dans lequel le système de traitement de contenants (1) est une installation de remplissage pour le versement d'au moins un milieu (5) dans un contenant (3), et/ou
dans lequel le moyen de retenue de contenants (10) est configuré pour retenir les contenants (3) dans un état en suspension ou dans un état vertical.

6. Procédé de réglage d'une rambarde (20) d'un système de traitement de contenants (1), laquelle rambarde (20) sert à guider les contenants (3) au niveau d'un moyen de retenue de contenants (10), le procédé comprenant les étapes suivantes :
régler, à l'aide d'un moyen de réglage (30) du système de traitement de contenants (1), au moins une partie de la rambarde (20) par rapport au moyen de retenue de contenants (10), dans lequel le moyen de réglage (30) comprend un actionneur (39) qui fonctionne par magnétisme et exerce un mouvement d'avance sur un élément de réglage (34) du moyen de réglage (30), dans lequel l'actionneur (39) entraîne un axe (37) au niveau duquel est positionné un élément d'accouplement (36) pour l'accouplement à l'élément de réglage (34),
**caractérisé par** les étapes suivantes :
retenir l'actionneur (39) dans un état de repos au moyen d'un frein d'immobilisation, dans lequel l'élément de réglage est réalisé sous la forme d'une crémaillère (34) ou d'une chaîne à maillons (44) qui comprend des maillons rigides et l'élément d'accouplement est une roue dentée (36) ou l'élément d'accouplement accouple l'actionneur (39) et l'élément de réglage à force, et
dans lequel l'élément de réglage (34) peut être réglé par la roue dentée (36), si l'axe (37) est entraîné par l'actionneur (39), pour régler la rambarde (20) par rapport au moyen de retenue de contenants (10).
